# EUROPEAN PATENT APPLICATION

(11) **EP 4 543 087 A1**
(43) Date of publication of application: **23.04.2025**
(21) Application number: 22946633.9
(22) Date of filing: 20.12.2022
(51) Int. Cl.: H04W 36/30

(54) **AERONAUTICAL MOBILE COMMUNICATION SYSTEM, METHOD AND APPARATUS, ELECTRONIC DEVICE, AND STORAGE MEDIUM**

(30) Priority: 14.06.2022 CN 202210668905
(71) Applicant: China Telecom Corporation Limited, Beijing 100033 (CN)
(72) Inventor: XIE, Weiliang, Beijing 100033 (CN); ZHAO, Yong, Beijing 100033 (CN); WANG, Qingyang, Beijing 100033 (CN); ZHANG, Chengliang, Beijing 100033 (CN)
(74) Representative: Petraz, Gilberto Luigi
(86) International application number: PCT/CN2022/140469
(87) International publication number: WO 2023/240968

(57) **Abstract**

Provided in the embodiments of the present disclosure are an aeronautical mobile communication system, method and apparatus, an electronic device, and a storage medium. In aeronautical mobile communication, ATG terminals and ground IMT base stations may use the same frequency, such that the available frequency bandwidth for the ATG terminals can be widened, thereby satisfying demands of users on the aeronautical mobile service bandwidth. When a target ATG terminal needs to hand over an ATG base station, among ATG base stations providing a communication service for the target ATG terminal, a target ATG base station is determined on the basis of a measurement result for downlink signals from other base stations to the target ATG terminal and the number of IMT base stations in an area covered by uplink signals from the target ATG terminal to the other ATG base stations. Therefore, a proper ATG base station to be handed over is determined from other ATG base stations on the basis of the measurement result for the downlink signals from other base stations to the target ATG terminal and the number of the IMT base stations in the area covered by the uplink signals from the target ATG terminal to each of other ATG base stations.

## Description

### CROSS REFERENCE TO RELATED APPLICATIONS

The present disclosure is proposed based on Chinese Patent Application No. 202210668905.0, filed on June 14, 2022, entitled "Aviation Mobile Communication System, Method, Apparatus, Electronic Device, and Storage Medium", and claims the priority of the Chinese Patent Application, which is incorporated herein by reference in its entirety.

### TECHNICAL FIELD

The present disclosure relates to the field of aviation communication technology, and in particular, to an aviation mobile communication system, a method, an apparatus, an electronic device, and a storage medium.

### BACKGROUND

With the large popularity and rapid development of mobile services, mobile network services need to be provided for users on airplanes or other aerospace vehicles, and at present, there are methods based on satellite communication and ATG (Air To Ground, or Air-Ground Broadband communication) in a manner of providing mobile network services for users, and at present, from a global main market, it is gradually converted into an ATG mode.

### SUMMARY

According to embodiments of the present disclosure, there is provided an aviation mobile communication system, a method, an apparatus, an electronic device, and a storage medium.

According to embodiments of the present disclosure, there is provided an aviation mobile communication system, including:
an ATG terminal and a plurality of ATG base stations, where a signal frequency of the ATG terminal is at least partially the same as a signal frequency of an IMT base station;
the ATG base station is configured to, when a target ATG terminal for which the ATG base station provides a communication service needs handover of the ATG base station, generate a measurement instruction for the target ATG terminal, and send the measurement instruction to the target ATG terminal; where the ATG terminal comprises the target ATG terminal;
the target ATG terminal is configured to, after receiving the measurement instruction, obtain downlink signals of the plurality of ATG base stations within a communication range based on the measurement instruction, obtain a measurement result for each downlink signal, and send the measurement result for each downlink signal to the ATG base station that provides the communication service for the target ATG terminal;
the ATG base station is further configured to receive the measurement result for each downlink signal, obtain a quantity of IMT base stations in a coverage area of an uplink signal from the target ATG terminal to each ATG base station, determine a target ATG base station based on the measurement result for each downlink signal and the quantity of the IMT base stations, send a base station handover instruction to the target ATG terminal, and send an instruction for providing a service for the target ATG terminal to the target ATG base station;
the target ATG terminal is configured to send an uplink signal to the target ATG base station after receiving the base station handover instruction; and
the target ATG base station is configured to provide a communication service for the target ATG terminal after receiving the instruction for providing the service for the target ATG terminal.

In a possible embodiment, the ATG base station is further configured to:
determine a signal quality of each downlink signal after receiving the measurement result for each downlink signal;
when it is absent that signal qualities of downlink signals of a preset quantity of ATG base stations reach a preset signal quality threshold, take an ATG base station corresponding to a downlink signal with a best signal quality as the target ATG base station; or
when it is present that signal qualities of downlink signals of a preset quantity of ATG base stations reach the preset signal quality threshold, for each ATG base station in the communication range, obtain a quantity of IMT base stations in the coverage area of the uplink signal from the target ATG terminal to the ATG base station, and take an ATG base station with a minimum quantity as the target ATG base station.

In a possible embodiment, the ATG base station is further configured to:
when providing the communication service for the target ATG terminal, if a preset signal sent by a specified IMT base station is received, generate a measurement instruction, where the specified IMT base station is an IMT base station in the coverage area of the uplink signal from the target ATG terminal to the ATG base station, and the preset signal represents that the uplink signal from the target ATG terminal to the ATG base station has uplink interference to the specified IMT base station, and the interference exceeds a preset interference threshold.

In a possible embodiment, the ATG terminal includes a plurality of ATG terminal antennas; and the ATG base station is further configured to:
when providing the communication service for the target ATG terminal, for each ATG base station within the communication range, obtain a width of a transmit beam of an ATG terminal antenna corresponding to the ATG base station;
calculate the coverage area of the uplink signal from the target ATG terminal to the ATG base station according to the width of the transmit beam of the ATG terminal antenna; and
calculate the quantity of IMT base stations in the coverage area

According to embodiments of the present disclosure, there is provided an aviation mobile communication method, applied to an ATG base station in an aviation mobile communication system, where the system further includes an ATG terminal and another plurality of ATG base stations, a signal frequency of the ATG terminal is at least partially the same as a signal frequency of an IMT base station, and the method includes:
when a target ATG terminal for which the ATG base station provides a communication service needs handover of the ATG base station, generating a measurement instruction for the target ATG terminal, and sending the measurement instruction to the target ATG terminal, to enable the target ATG terminal to obtain downlink signals of a plurality of ATG base stations within a communication range based on the measurement instruction, obtain a measurement result for each downlink signal, and send the measurement result for each downlink signal to the ATG base station that provides the communication service for the target ATG terminal; where the ATG terminal includes the target ATG terminal;
receiving the measurement result for each downlink signal sent by the target ATG terminal, and obtaining a quantity of IMT base stations in a coverage area of an uplink signal from the target ATG terminal to each ATG base station;
determining a target ATG base station based on the measurement result for each downlink signal and the quantity of the IMT base stations;
sending a base station handover instruction to the target ATG terminal, and sending an instruction for providing a service for the target ATG terminal to the target ATG base station, to enable the target ATG terminal to send an uplink signal to the target ATG base station after receiving the base station handover instruction, and enable the target ATG base station to provide a communication service for the target ATG terminal after receiving the instruction for providing the service for the target ATG terminal; and
when receiving an instruction for providing a service for the target ATG terminal sent by another ATG base station, providing the communication service for the target ATG terminal.

In a possible embodiment, after the receiving the measurement result for each downlink signal sent by the target ATG terminal for which the ATG base station provides the communication service, the method includes:
determining a signal quality of each downlink signal;
where determining the target ATG base station based on the measurement result for each downlink signal and the quantity of the IMT base stations includes:
   when it is absent that signal qualities of downlink signals of a preset quantity of ATG base stations reach a preset signal quality threshold, taking an ATG base station corresponding to a downlink signal with a best signal quality as the target ATG base station; or
   when it is present that signal qualities of downlink signals of a preset quantity of ATG base stations reach the preset signal quality threshold, for each ATG base station within the communication range, obtaining a quantity of IMT base stations in the coverage area of the uplink signal from the target ATG terminal to the ATG base station, and taking an ATG base station with a minimum quantity as the target ATG base station.

In a possible embodiment, the method further includes:
when providing the communication service for the target ATG terminal, if a preset signal sent by a specified IMT base station is received, generating a measurement instruction, where the specified IMT base station is an IMT base station in the coverage area of the uplink signal from the target ATG terminal to the ATG base station, the preset signal represents that the uplink signal from the target ATG terminal to the ATG base station has uplink interference to the specified IMT base station, and the interference exceeds a preset interference threshold.

In a possible embodiment, obtaining the quantity of IMT base stations in the coverage area of the uplink signal from the target ATG terminal to the ATG base station includes:
when providing the communication service for the target ATG terminal, for each ATG base station within the communication range, obtaining a width of a transmit beam of an ATG terminal antenna corresponding to the ATG base station;
calculating the coverage area of the uplink signal from the target ATG terminal to the ATG base station according to the width of the transmit beam of the ATG terminal antenna; and
calculating the quantity of IMT base stations in the coverage area.

According to embodiments of the present disclosure, there is provided an aviation mobile communication method, applied to an ATG terminal in an aviation mobile communication system, where the system further includes a plurality of ATG base stations, a signal frequency of the ATG terminal is at least partially the same as a signal frequency of an IMT base station, and the method includes:
obtaining a measurement instruction sent by an ATG base station that provides a communication service for the ATG terminal, where the measurement instruction is generated by the ATG base station that provides the communication service for the ATG terminal when the ATG terminal needs handover of the ATG base station;
obtaining downlink signals of a plurality of ATG base stations within a communication range based on the measurement instruction, and obtaining a measurement result for each downlink signal;
sending the measurement result for each downlink signal to the ATG base station that provides the communication service for the ATG terminal; and
receiving a base station handover instruction sent by the ATG base station that provides the communication service for the ATG terminal, and sending an uplink signal to a target ATG base station, where a manner for determining the target ATG base station is: receiving, by the ATG base station that provides the communication service for the ATG terminal, the measurement result for each downlink signal, obtaining a quantity of IMT base stations in a coverage area of an uplink signal from the target ATG terminal to each ATG base station, and determining the target ATG base station based on the measurement result for each downlink signal and the quantity of the IMT base stations.

According to embodiments of the present disclosure, there is provided an aviation mobile communication apparatus, applied to an ATG base station in an aviation mobile communication system, where the system further includes an ATG terminal and another plurality of ATG base stations, a signal frequency of the ATG terminal is at least partially the same as a signal frequency of an IMT base station, and the apparatus includes:
a generation module, configured to, when a target ATG terminal for which the ATG base station provides a communication service needs handover of the ATG base station, generate a measurement instruction for the target ATG terminal, and send the measurement instruction to the target ATG terminal, to enable the target ATG terminal to obtain downlink signals of a plurality of ATG base stations in a communication range based on the measurement instruction, obtain a measurement result for each downlink signal, and send the measurement result for each downlink signal to the ATG base station that provides the communication service for the target ATG terminal; where the ATG terminal includes the target ATG terminal;
a receiving module, configured to receive the measurement result for each downlink signal sent by the target ATG terminal, and obtain a quantity of IMT base stations in a coverage area of an uplink signal from the target ATG terminal to each ATG base station;
a determination module, configured to determine a target ATG base station based on the measurement result for each downlink signal and the quantity of the IMT base stations;
a sending module, configured to send a base station handover instruction to the target ATG terminal, and send an instruction for providing a service for the target ATG terminal to the target ATG base station, to enable the target ATG terminal to send an uplink signal to the target ATG base station after receiving the base station handover instruction, and enable the target ATG base station to provide a communication service for the target ATG terminal after receiving the instruction for providing the service for the target ATG terminal;
a service providing module, configured to provide the communication service for the target ATG terminal when receiving an instruction sent by another ATG base station for providing a service for the target ATG terminal.

In a possible embodiment, after receiving the measurement result for each downlink signal sent by the target ATG terminal for which the ATG base station provides the communication service, the apparatus includes:
a signal instruction determination module, configured to determine a signal quality of each downlink signal;
where the determination module is further configured to:
   when it is absent that signal qualities of downlink signals of a preset quantity of ATG base stations reach a preset signal quality threshold, take an ATG base station corresponding to a downlink signal with a best signal quality as the target ATG base station; or
   when it is present that signal qualities of downlink signals of a preset quantity of ATG base stations reach the preset signal quality threshold, for each ATG base station within the communication range, obtain a quantity of IMT base stations in the coverage area of the uplink signal from the target ATG terminal to the ATG base station, and take an ATG base station with a minimum quantity as the target ATG base station.

In a possible embodiment, the apparatus further includes:
a processing module, configured to, when providing the communication service for the target ATG terminal, if a preset signal sent by a specified IMT base station is received, generate a measurement instruction, where the specified IMT base station is an IMT base station in the coverage area of the uplink signal from the target ATG terminal to the ATG base station, the preset signal represents that the uplink signal from the target ATG terminal to the ATG base station has uplink interference to the specified IMT base station, and the interference exceeds a preset interference threshold.

In a possible embodiment, the determination module is further configured to:
when providing the communication service for the target ATG terminal, for each ATG base station within the communication range, obtain a width of a transmit beam of an ATG terminal antenna corresponding to the ATG base station;
calculate the coverage area of the uplink signal from the target ATG terminal to the ATG base station according to the width of the transmit beam of the ATG terminal antenna; and
calculate the quantity of IMT base stations in the coverage area.

According to embodiments of the present disclosure, there is provided an aviation mobile communication apparatus, applied to an ATG terminal in an aviation mobile communication system, where the system further includes a plurality of ATG base stations, a signal frequency of the ATG terminal is at least partially the same as a signal frequency of an IMT base station, and the apparatus includes:
a first obtaining module, configured to obtain a measurement instruction sent by an ATG base station that provides a communication service for the ATG terminal, where the measurement instruction is generated by the ATG base station that provides the communication service for the ATG terminal when the ATG terminal needs to handover of the ATG base station;
a second obtaining module, configured to obtain downlink signals of a plurality of ATG base stations within a communication range based on the measurement instruction, and obtain a measurement result for each downlink signal;
a sending module, configured to send the measurement result for each downlink signal to the ATG base station that provides the communication service for the ATG terminal; and
a receiving module, configured to receive a base station handover instruction sent by the ATG base station that provides the communication service for the ATG terminal, and send an uplink signal to a target ATG base station, where a manner for determining the target ATG base station is: receiving, by the ATG base station that provides the communication service for the ATG terminal, the measurement result for each downlink signal, obtaining a quantity of IMT base stations in the coverage area of the uplink signal from the target ATG terminal to each ATG base station, and determining the target ATG base station based on the measurement result for each downlink signal and the quantity of the IMT base stations.

According to embodiments of the present disclosure, there is provided an electronic device, including a processor, a communication interface, a memory, and a communication bus; where the processor, the communication interface, and the memory communicate with each other through the communication bus;
the memory is configured to store a computer program; and
the processor is configured to, when executing the program stored in the memory, implement any one of the above-mentioned aviation mobile communication methods.

According to embodiments of the present disclosure, there is provided a computer-readable storage medium, where a computer program is stored in the computer-readable storage medium, and when the computer program is executed by a processor, any one of the above-mentioned aviation mobile communication methods is implemented.

According to embodiments of the present disclosure, there is provided a computer program product including an instruction, and when the computer program product runs on a computer, the computer is enabled to perform any one of the above-mentioned aviation mobile communication methods.

### BRIEF DESCRIPTION OF THE DRAWINGS

In order to more clearly illustrate the technical solutions in the embodiments of the present disclosure or in the related art, the accompany drawings required in the description of the embodiments or the related art will be briefly described below. Obviously, the drawings in the following description are merely some embodiments of the present disclosure; and for those of ordinary skill in the art, other embodiments may be obtained according to these drawings.
FIG. 1 is a first schematic diagram of an aviation mobile communication system provided according to an embodiment of the present disclosure;
FIG. 2 is a first schematic diagram when a frequency for communication between an ATG terminal and an ATG base station is the same as a frequency for an IMT base station area provided according to an embodiment of the present disclosure;
FIG. 3a is a schematic diagram of handover between a plurality of base stations when a frequency for communication between an ATG terminal and an ATG base station is the same as a frequency for an IMT base station area, provided according to an embodiment of the present disclosure;
FIG. 3b is a second schematic diagram when a frequency for communication between an ATG terminal and an ATG base station is the same as a frequency for an IMT base station area provided according to an embodiment of the present disclosure;
FIG. 4 is a schematic diagram of interaction applied to an aviation mobile communication system provided according to an embodiment of the present disclosure;
FIG. 5 is a schematic flowchart of an aviation mobile communication method applied to an ATG base station in an aviation mobile communication system provided according to an embodiment of the present disclosure;
FIG. 6 is a schematic flowchart of an aviation mobile communication method applied to an ATG terminal in an aviation mobile communication system provided according to an embodiment of the present disclosure;
FIG. 7 is a schematic structural diagram of an aviation mobile communication apparatus applied to an ATG base station in an aviation mobile communication system provided according to an embodiment of the present disclosure;
FIG. 8 is a schematic structural diagram of an aviation mobile communication apparatus applied to an ATG terminal in an aviation mobile communication system provided according to an embodiment of the present disclosure;
FIG. 9 is a schematic structural diagram of an electronic device according to an embodiment of the present disclosure.

### DETAILED DESCRIPTION

The technical solutions in the embodiments of the present disclosure will be clearly and completely described below with reference to the accompanying drawings in the embodiments of the present disclosure. Obviously, the described embodiments are only a part of the embodiments of the present disclosure, not all the embodiments of the present disclosure. All other embodiments, obtained by those of ordinary skill in the art based on the embodiments in the present disclosure, fall within the protection scope of the present disclosure.

Due to the fact that, at present, most of the dedicated frequencies allocated separately to the ATG are only allocated with a small bandwidth. Currently, it is difficult to divide a segment of bandwidth frequency for use by the ATG system separately, but the user's demands for bandwidth in aviation mobile services continues to increase. Therefore, there is an urgent need to provide a solution that meets the user's demands for bandwidth in aviation mobile services.

According to embodiments of the present disclosure, there is disclosed an aviation mobile communication system, a method, an apparatus, an electronic device, and a medium, which are described below respectively.

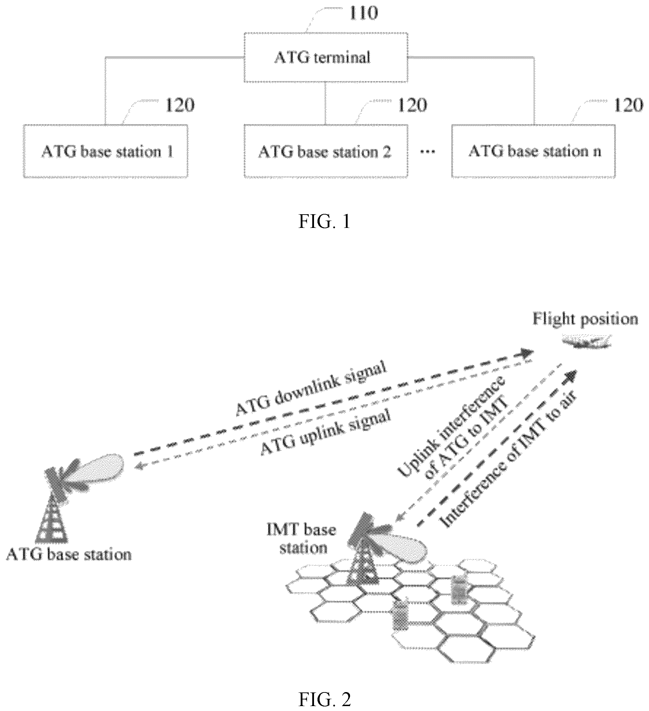

According to embodiments of the present disclosure, there is provided an aviation mobile communication system. Referring to FIG. 1, FIG. 1 is a schematic diagram of an aviation mobile communication system according to an embodiment of the present disclosure, and the aviation mobile communication system includes:
an ATG terminal 110 and a plurality of ATG base stations 120, where the signal frequency of the ATG terminal is at least partially the same as the signal frequency of an IMT base station.

An ATG base station is configured to, when a target ATG terminal for which the ATG base station provides a communication service needs handover of the ATG base station, generate a measurement instruction for the target ATG terminal, and send the measurement instruction to the target ATG terminal. The ATG terminal 110 may include the target ATG terminal.

The target ATG terminal is configured to, after receiving the measurement instruction, obtain downlink signals of the plurality of ATG base stations within the communication range based on the measurement instruction, obtain a measurement result for each downlink signal, and send the measurement result for each downlink signal to the ATG base station that provides the communication service for the target ATG terminal.

The ATG base station is further configured to receive the measurement result for each downlink signal, obtain the quantity of IMT base stations in a coverage area of an uplink signal from the target ATG terminal to each ATG base station, determine a target ATG base station based on the measurement result for each downlink signal and the quantity of IMT base stations, send a base station handover instruction to the target ATG terminal, and send an instruction for providing a service for the target ATG terminal to the target ATG base station.

The target ATG terminal is configured to send an uplink signal to the target ATG base station after receiving the base station handover instruction.

The target ATG base station is configured to provide a communication service for the target ATG terminal after receiving the instruction for providing the service for the target ATG terminal.

In the present disclosure, the signal frequency of the ATG terminal is at least partially the same as the signal frequency of the IMT base station; that is, the ATG terminal in the aviation mobile communication and the IMT base station on the ground may use the same frequency, which may broaden the frequency bandwidth that may be used by the ATG terminal, thus satisfying the user's demands for bandwidth in the aviation mobile services. Moreover, when the target ATG terminal needs handover of the ATG base station, the ATG base station currently providing the communication service for the target ATG terminal determines the target ATG base station based on the measurement result for the downlink signals from other base stations to the target ATG terminal and the quantity of the IMT base stations in the coverage area of the uplink signal from the target ATG terminal to each of other ATG base stations, so that when the target ATG terminal needs handover of the ATG base station, an appropriate ATG base station may be determined from the other ATG base stations based on the signal quality of the downlink signals from the other base stations to the target ATG terminal and the quantity of the IMT base stations in the coverage area of the uplink signal from the target ATG terminal to each of other ATG base stations.

When the frequency of communication between the ATG terminal and the ATG base station is the same as the frequency of the IMT base station area, that is, same frequency networking is performed between the ATG system (the system for communication between the ATG terminal and the ATG base station) and the IMT system (the system providing the communication service by the IMT base station). As shown in FIG. 2, when the ATG terminal transmits an uplink signal to the ATG base station on the ground from the aircraft, the ATG terminal may generate a same frequency interference signal for the uplink of the IMT base station on the ground; and since the coverage area range is very large when the ATG terminal transmits the signal to the ground, a large quantity of IMT base stations on the ground will receive the interference signal from the ATG terminal, which has great impact on the performance of the IMT system. Meanwhile, due to the fact that the upper side lobe of the antenna of the IMT base station on the ground transmits the downlink signal upwards, the upper side lobe of the antenna of each IMT base station is inconsistent with each other, and the loss of the transmission link to the air is small, the downlink same frequency signals transmitted by the large quantity of IMT base stations on the ground to the air will interfere with the downlink of the ATG base station; or evenly, a gathered total strong interference area, in which downlink signals form a large quantity of IMT base stations are superimposed, is formed in some airspace.

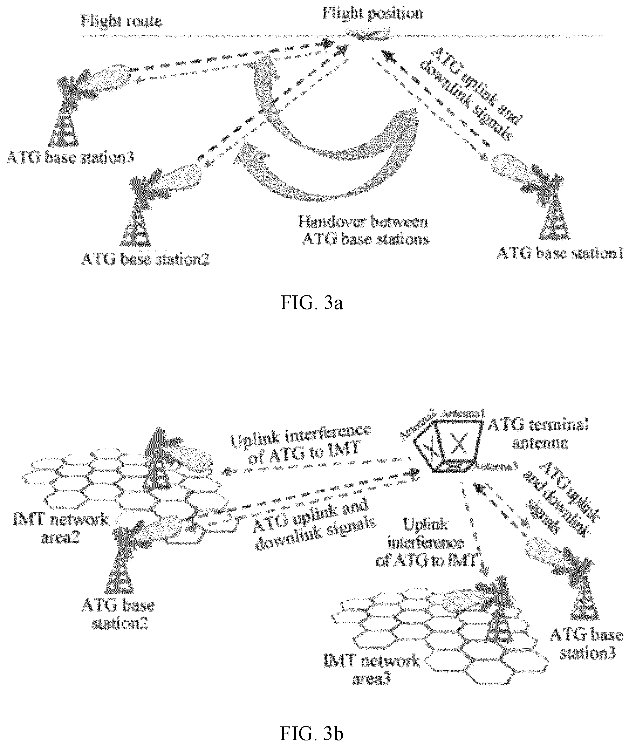

Moreover, as shown in FIG. 3a, in order to continuously provide the aviation mobile ATG service for the user on the aircraft in the flight process, the ATG terminal performs handover of the uplink and downlink between different ATG base stations and maintains the stability of the ATG communication. Therefore, when the ATG base station provides a communication service for the ATG terminal, the ATG base station needs to determine in which condition the target ATG terminal needs handover of the ATG base station. Specifically, the ATG base station may determine based on the communication signal quality between the ATG base station and the target ATG terminal, and/or whether an uplink signal from the ATG terminal to the ATG base station has uplink interference to the IMT base station in the coverage area of the uplink signal, as well as the interference degree. For example, when the communication signal quality between the ATG base station and the target ATG terminal is lower than a preset threshold, in order to maintain the stability of the ATG communication, it may be determined that the ATG terminal needs handover of the ATG base station; or when the uplink signal from the ATG terminal to the ATG base station has uplink interference to the IMT base station in the coverage area of the uplink signal, and the interference degree exceeds a preset threshold, it is determined that the ATG terminal needs handover of the ATG base station.

When it is determined that the target ATG terminal needs handover of the ATG base station, a measurement instruction for the target ATG terminal is generated, and the measurement instruction is sent to the target ATG terminal, where the measurement instruction is used to instruct the target ATG terminal to measure downlink signals of other ATG base stations. Specifically, the measurement instruction is used to instruct the target ATG terminal to measure downlink signals of all the ATG base stations within the communication range of the target ATG terminal, to obtain a measurement result for each downlink signal, where the measurement result for each downlink signal represents the quality measurement result for each downlink signal, and may include information representing the signal quality, such as the signal-to-noise ratio and/or the signal strength of each downlink signal. Then, the quality measurement result for the downlink signal is sent to the ATG base station, and a target ATG base station is selected by the ATG base station.

Furthermore, the measurement instruction is used to instruct the target ATG terminal to perform measurement on an ATG base station adjacent to the ATG base station that provides a communication service for the target ATG terminal. For example, the ATG terminal currently communicates with the ATG base station 1, and the ATG base station 1 itself stores information about the adjacent ATG base stations. If the base stations adjacent to the ATG base station 1 are the ATG base station 2, the ATG base station 3, and the ATG base station 4, the ATG terminal may only measure downlink signals of the ATG base station 2, the ATG base station 3, and the ATG base station 4, and then send the obtained quality measurement result for the downlink signal of the ATG base station to the ATG base station. The target ATG base station is selected by the ATG base station.

After receiving the measurement result for each downlink signal, the ATG base station obtains the quantity of IMT base stations in the coverage area of the uplink signal from the target ATG terminal to each ATG base station. Among them, the ATG base station may store specific information about each IMT base station in the vicinity, and determine the quantity of IMT base stations in the coverage area of the uplink signal to each ATG base station based on the pre-stored position information about each IMT base station. The target ATG base station is determined based on the measurement result for each downlink signal and the quantity of IMT base stations, a base station handover instruction is sent to the target ATG terminal, and an instruction for providing a service for the target ATG terminal is sent to the target ATG base station, so that the target ATG terminal sends an uplink signal to the target ATG base station after receiving the base station instruction, and the target ATG base station provides a communication service for the target ATG terminal after receiving the instruction for providing a service for the target ATG terminal.

In a possible embodiment, the ATG base station may be configured to:
determine a signal quality of each downlink signal after receiving the measurement result for each downlink signal;
when it is absent that signal qualities of downlink signals of a preset quantity of ATG base stations reach a preset signal quality threshold, take an ATG base station corresponding to a downlink signal with a best signal quality as the target ATG base station;
when it is present that signal qualities of downlink signals of a preset quantity of ATG base stations reach the preset signal quality threshold, for each ATG base station in the communication range, obtain a quantity of IMT base stations in the coverage area of the uplink signal from the target ATG terminal to the ATG base station, and take an ATG base station with a minimum quantity as the target ATG base station.

After receiving the measurement result for each downlink signal, the ATG base station may determine the signal quality of each downlink signal based on any parameter representing the signal quality, such as the signal-to-noise ratio of the signal and/or the signal strength of the signal. When it is absent that signal qualities of a preset quantity of downlink signals reach a preset signal quality threshold, the ATG base station directly selects the ATG base station with a best downlink signal quality as the target ATG base station. When it is present that signal qualities of downlink signals of a preset quantity of ATG base stations reach the preset signal quality threshold, the ATG base station preferentially selects the ATG base station, for which the quantity of IMT network base stations covered by the uplink signal from the ATG terminal to the adjacent ATG base stations is less, as the target ATG base station. The preset quantity may be set based on an actual situation; for example, it may be set to 1, which is not limited here.

As shown in FIG. 3, in order to continuously provide the aviation mobile ATG service for the user on the aircraft in the flight process, the ATG terminal performs handover of the uplink and downlink between different ATG base stations, and maintains the stability of ATG communication. When the ATG terminal performs handover, if there are only one target ATG base station for handover, the ATG uplink and downlink may be handed over to the target ATG base station as long as the signal quality of the target ATG base station satisfies the requirements. However, when the ATG terminal performs handover, if there are more than one target ATG base station with comparable signal qualities, the ATG base station, for which the quantity of IMT network base stations covered by the uplink signal from the ATG terminal to the adjacent ATG base stations is less, is preferentially selected as the target ATG base station. Therefore, the possibility that the uplink signal from the ATG terminal to the ATG base station interferes with the network corresponding to the IMT base station is reduced when the frequency of the communication between the ATG base station and the ATG terminal is the same as the network frequency corresponding to the IMT base station.

In a possible embodiment, the ATG base station may be configured to:
when providing a communication service for the target ATG terminal, if a preset signal sent by a specified IMT base station is received, generate a measurement instruction, where the specified IMT base station is an IMT base station in a coverage area of an uplink signal from the target ATG terminal to the ATG base station, and the preset signal represents that an uplink signal from the target ATG terminal to the ATG base station has uplink interference to the specified IMT base station, and the interference exceeds a preset interference threshold.

When the IMT base station detects that the IMT base station is subjected to uplink interference and the subjected uplink interference exceeds a preset interference threshold, the IMT base station sends a preset signal to all adjacent ATG base stations in the vicinity, so as to inform all adjacent ATG base stations in the vicinity that the IMT base station itself is subjected to an uplink interference. Among them, the preset signal may be any indication signal representing that the uplink signal from the ATG terminal to the ATG base station has uplink interference to the IMT base station; for example, the indication signal may be the interference signal itself, or an indication signal agreed by the ATG base station and the IMT, such as the signal "1", which represents that the uplink interference is present and the subjected uplink interference exceeds a preset interference threshold.

Furthermore, when providing a communication service for the target ATG terminal, the ATG base station may protocol with the IMT base station in the coverage area of the uplink signal from the target ATG terminal to the ATG base station that which kind of signal represents that uplink interference is caused to the IMT base station. For example, when the IMT base station sends a signal "1" to the ATG base station, it represents that the uplink signal from the target ATG terminal to the ATG base station has uplink interference to the IMT base station, and the subjected uplink interference exceeds a preset interference threshold.

After receiving the preset signal sent by the IMT base station, each ATG base station may analyze, based on the position information of the IMT base station and the position of the ATG terminal served by the ATG base station, whether it is that the own uplink signal of the ATG terminal served by the ATG base station has interference to the IMT base station. The manner of determining the position information of the IMT base station by the ATG base station is as follows: attribute information about the adjacent base stations may be stored in each ATG base station; the attribute information includes the identification information of the IMT base station and the position information of the IMT base station; the preset signal sent by the IMT base station to each ATG base station includes its own identification information; and after receiving the preset signal, the ATG base station may determine the corresponding position information based on the identification information of the IMT base station. Then, based on the position information of the ATG terminal served by the ATG base station, the ATG base station may determine the coverage area of the uplink signal from the ATG terminal served by the ATG base station to the ATG base station, and then may determine whether the position of the IMT base station is in the coverage area of the uplink signal from the ATG terminal served by the ATG base station to the ATG base station. If so, the ATG base station may determine that the own uplink signal of the ATG terminal served by the ATG base station has interference to the IMT base station.

If the ATG base station determines that the own uplink signal of the ATG terminal served by the ATG base station has interference to the IMT base station, the ATG base station generates a measurement instruction, so that after receiving the measurement instruction, the target ATG terminal obtains downlink signals of more than one ATG base stations within the communication range based on the measurement instruction. The ATG base station currently providing the communication service for the target ATG terminal determines the target ATG base station based on the signal quality of the downlink signals from other base stations to the target ATG terminal and the quantity of the IMT base stations in the coverage area of the uplink signal from the target ATG terminal to each of other ATG base stations. Therefore, when he target ATG terminal needs handover of the ATG base station, an appropriate ATG base station may be determined from other ATG base stations based on the signal quality of the downlink signals from other base stations to the target ATG terminal and the quantity of the IMT base stations in the coverage area of the uplink signal from the target ATG terminal to each of other ATG base stations, so as to avoid uplink interference to the network area corresponding to the IMT base station on the ground.

For example, the antenna of the ATG terminal may be arranged in the form of a multi-planar array.

In order to enable the ATG terminal to communicate with the ATG base stations at different positions on the ground, the aircraft needs handover of the uplink and downlink between different ATG base stations when flying on the flight route. The ATG terminal antenna may adopt a design scheme of an omnidirectional antenna or a multi-planar array antenna. Since the omnidirectional antenna may receive the interference from the IMT base stations on the ground in various directions at the same time, and may interfere with a larger-range IMT network on the ground, the ATG terminal may adopt the arrangement scheme of a multi-planar array. In this way, after the ATG base station is determined, a single-planar antenna may be used to communicate with the ATG base station, so that signals sent by the MIT base stations in all directions do not need to be received, and interference may not be caused to the MIT base stations in all directions. Therefore, the possibility that the uplink signal from the ATG terminal to the ATG base station interferes with the network corresponding to the IMT base station is reduced when the frequency of the communication between the ATG base station and the ATG terminal is the same as the network frequency corresponding to the IMT base station.

In a possible embodiment, the ATG terminal may include a plurality of ATG terminal antennas, and the ATG base station may be further configured to:
when providing a communication service for the target ATG terminal, for each ATG base station within the communication range, obtain a width of a transmit beam of an ATG terminal antenna corresponding to the ATG base station;
calculate the coverage area of the uplink signal from the target ATG terminal to the ATG base station according to the width of the transmit beam of the ATG terminal antenna; and
calculate the quantity of IMT base stations in the coverage area.

The ATG terminal may include a plurality of ATG terminal antennas, and the ATG terminal antennas may be arranged in the manner of a multi-planar array, so as to receive or transmit signals in various angles from or to the ground. For example, the ATG terminal adopts a five-planar array antenna, which further includes a single-planar antenna to the ground in addition to a single-planar antenna respectively on the front, back, left and right. After the ATG base station providing the communication service for the ATG terminal is determined, the ATG terminal may communicate with the ATG base station by using a single-planar antenna. As shown in FIG. 3b, the ATG uplink signal sent by the ATG terminal antenna 2 is used to communicate with the ATG base station 2, and the ATG uplink signal sent by the ATG terminal antenna 3 is used to communicate with the ATG base station 3. Meanwhile, the uplink signal of the ATG terminal antenna 2 may interfere with the IMT base station in the IMT network area 2, and the uplink signal of the ATG terminal antenna 3 may also interfere with the IMT base station in the IMT network area 3. Therefore, when providing the communication service for the target ATG terminal, the ATG base station may obtain the width of the transmit beam of the ATG terminal antenna corresponding to the ATG base station. Specifically, the ATG terminal may send the width of the transmit beam of the ATG terminal antenna that transmits the radio frequency signal to the ATG base station to the ATG base station, and the ATG base station may calculate the coverage area of the uplink signal from the target ATG terminal to the ATG base station based on the width of the transmit beam of the ATG terminal antenna.

In addition, the ATG base station may store specific information about each IMT base station in the vicinity, such as position information of the IMT base station, etc. After the coverage area of the uplink signal from the target ATG terminal to the ATG base station is calculated, the ATG base station may determine which IMT base stations are arranged in the area, and may further determine the quantity of IMT base stations in the area. Therefore, the possibility that the uplink signal from the ATG terminal to the ATG base station interferes with the network corresponding to the IMT base station is reduced when the frequency of the communication between the ATG base station and the ATG terminal is the same as the network frequency corresponding to the IMT base station.

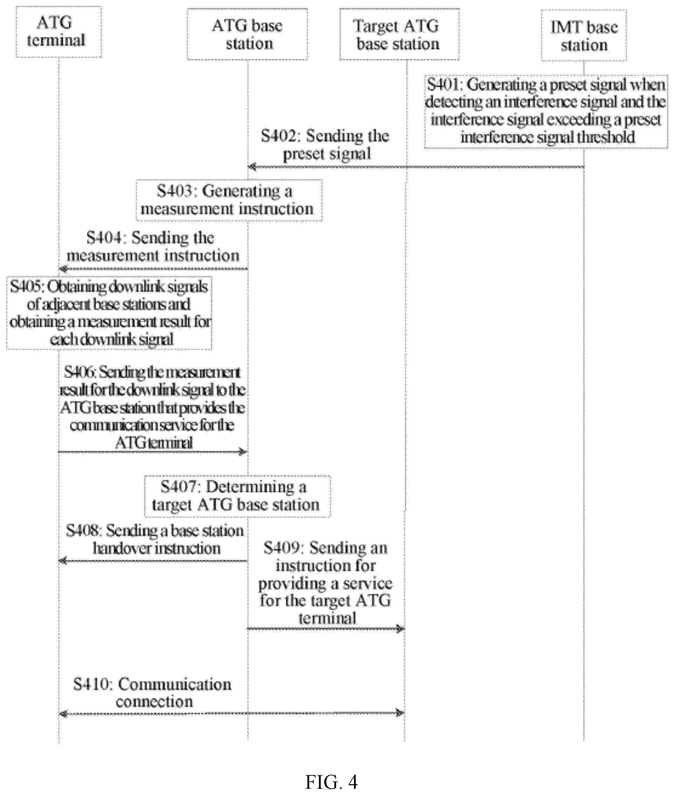

As shown in FIG. 4, FIG. 4 is a schematic diagram of interaction applied to an aviation mobile communication system provided according to an embodiment of the present disclosure.

The ATG base station shown in the figure is an ATG base station providing a communication service for the ATG terminal, an adjacent base station is an adjacent ATG base station of the ATG base station, the IMT base station is an IMT base station in the coverage area of an uplink signal from the ATG terminal to the ATG base station, and the signal frequency of the ATG terminal is at least partially the same as the signal frequency of the IMT base station.

The specific interaction process is as follows.

In S401, the IMT base station in the coverage area of an uplink signal from the (target) ATG terminal to the ATG base station detects that the uplink signal from the ATG terminal to the ATG base station has uplink interference to IMT base station; and when the interference degree exceeds a preset interference signal threshold, the IMT base station generates a preset signal.

In S402, the IMT base station sends the preset signal to the ATG base station.

In S403, the ATG base station generates a measurement instruction based on the preset signal.

In S404, after generating the measurement instruction, the ATG base station sends the measurement instruction to the target ATG terminal.

In S405, after receiving the measurement instruction, the ATG terminal obtains downlink signals of a plurality of ATG base stations in the communication range based on the measurement instruction, and obtains a measurement result for each downlink signal.

In S406, the ATG terminal sends the measurement result for the downlink signal to the ATG base station that provides the communication service for the ATG terminal.

In S407, the ATG base station is further configured to receive the measurement result for each downlink signal, obtain a quantity of IMT base stations in the coverage area of an uplink signal from the target ATG terminal to each ATG base station, and determine a target ATG base station based on the measurement result for each downlink signal and the quantity of IMT base stations. Specifically, when it is present that signal qualities of downlink signals of a plurality of ATG base stations reach the preset signal quality threshold, for each ATG base station in the communication range, the ATG base station obtains the quantity of IMT base stations in the coverage area of the uplink signal from the ATG terminal to the ATG base station, and takes an ATG base station with a minimum quantity as the target ATG base station.

In S408, the ATG base station sends a base station handover instruction to the target ATG terminal.

In S409, the ATG base station sends, to the target ATG base station, an instruction for providing a service for the target ATG terminal.

In S410, the target ATG terminal is configured to send an uplink signal to the target ATG base station after receiving the base station instruction, and the target ATG base station is configured to provide a communication service for the target ATG terminal after receiving the instruction for providing a service for the target ATG terminal.

The signal frequency of the ATG terminal is at least partially the same as the signal frequency of the IMT base station; that is, the ATG terminal in the aviation mobile communication and the IMT base station on the ground may use the same frequency, which may broaden the frequency bandwidth that may be used by the ATG terminal, thus satisfying the user's demands for bandwidth in the aviation mobile services. Moreover, when the target ATG terminal needs handover of the ATG base station, the ATG base station currently providing the communication service for the target ATG terminal determines the target ATG base station based on the signal quality of the downlink signals from other base stations to the target ATG terminal and the quantity of the IMT base stations in the coverage area of the uplink signal from the target ATG terminal to each of other ATG base stations, so that when the target ATG terminal needs handover of the ATG base station, an appropriate ATG base station may be determined from the other ATG base stations based on the signal quality of the downlink signals from the other base stations to the target ATG terminal and the quantity of the IMT base stations in the coverage area of the uplink signal from the target ATG terminal to each of other ATG base stations.

When the ATG terminal performs handover, if there are more than one target ATG base station with comparable signal qualities, the ATG base station, for which the quantity of IMT network base stations covered by the uplink signal from the ATG terminal to the adjacent ATG base stations is less, is preferentially selected as the target ATG base station. Therefore, the possibility that the uplink signal from the ATG terminal to the ATG base station interferes with the network corresponding to the IMT base station is reduced when the frequency of the communication between the ATG base station and the ATG terminal is the same as the network frequency corresponding to the IMT base station.

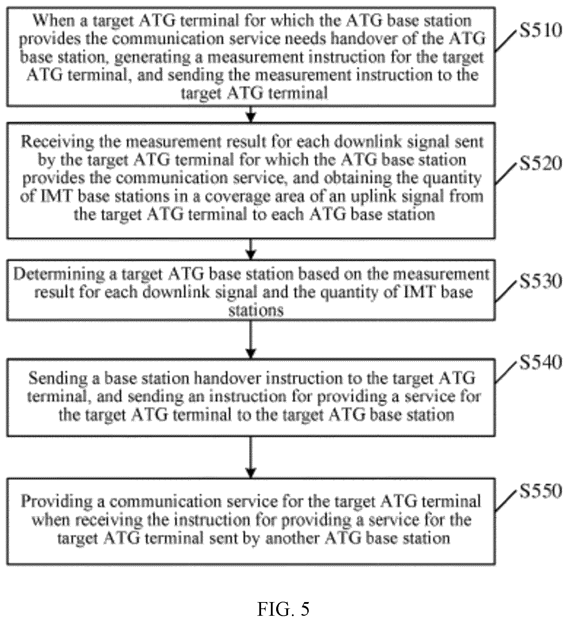

As shown in FIG. 5, FIG. 5 is a schematic flowchart of an aviation mobile communication method applied to an ATG base station in an aviation mobile communication system provided according to embodiments of the present disclosure. The system may include an ATG terminal and a plurality of ATG base stations, and a signal frequency of the ATG terminal is at least partially the same as a signal frequency of an IMT base station. The method may include the following steps.

In S510, when a target ATG terminal for which the ATG base station provides the communication service needs handover of the ATG base station, a measurement instruction for the target ATG terminal is generated, and the measurement instruction is sent to the target ATG terminal, so that the target ATG terminal obtains downlink signals of a plurality of ATG base stations within the communication range based on the measurement instruction, obtains a measurement result for each downlink signal, and sends the measurement result for each downlink signal to the ATG base station that provides the communication service for the target ATG terminal.

In S520, the measurement result for each downlink signal, sent by the target ATG terminal for which the ATG base station provides the communication service, is received; and the quantity of IMT base stations in a coverage area of an uplink signal from the target ATG terminal to each ATG base station is obtained.

In S530, a target ATG base station is determined based on the measurement result for each downlink signal and the quantity of IMT base stations.

In S540, a base station handover instruction is sent to the target ATG terminal, and an instruction for providing a service for the target ATG terminal is sent to the target ATG base station, so that the target ATG terminal sends an uplink signal to the target ATG base station after receiving the base station instruction, and the target ATG base station provides a communication service for the target ATG terminal after receiving the instruction for providing the service for the target ATG terminal.

In S550, a communication service is provided for the target ATG terminal when receiving the instruction for providing a service for the target ATG terminal sent by another ATG base station.

In a possible embodiment, after receiving the measurement result for each downlink signal sent by the target ATG terminal for which the ATG base station provides the communication service, the method includes:
determining a signal quality of each downlink signal.

And, determining the target ATG base station based on the signal quality of each downlink signal and the quantity of the IMT base stations includes:
when it is absent that signal qualities of downlink signals of a preset quantity of ATG base stations reach a preset signal quality threshold, taking an ATG base station corresponding to a downlink signal with a best signal quality as the target ATG base station; or
when it is present that signal qualities of downlink signals of a preset quantity of ATG base stations reach the preset signal quality threshold, for each ATG base station within communication range, obtaining a quantity of IMT base stations in a coverage area of an uplink signal from the target ATG terminal to the ATG base station, and taking an ATG base station with a minimum quantity as the target ATG base station.

In a possible embodiment, the method may further include:
when providing a communication service for the target ATG terminal, if a preset signal sent by a specified IMT base station is received, generating a measurement instruction, where the specified IMT base station is an IMT base station in the coverage area of the uplink signal from the target ATG terminal to the ATG base station, the preset signal represents that the uplink signal from the target ATG terminal to the ATG base station has uplink interference to the specified IMT base station, and the interference exceeds a preset interference threshold.

In a possible embodiment, obtaining the quantity of IMT base stations in the coverage area of the uplink signal from the target ATG terminal to the ATG base station includes:
when providing a communication service for the target ATG terminal, for each ATG base station within the communication range, obtaining a width of a transmit beam of an ATG terminal antenna corresponding to the ATG base station;
calculating the coverage area of the uplink signal from the target ATG terminal to the ATG base station according to the width of the transmit beam of the ATG terminal antenna; and
calculating the quantity of IMT base stations in the coverage area.

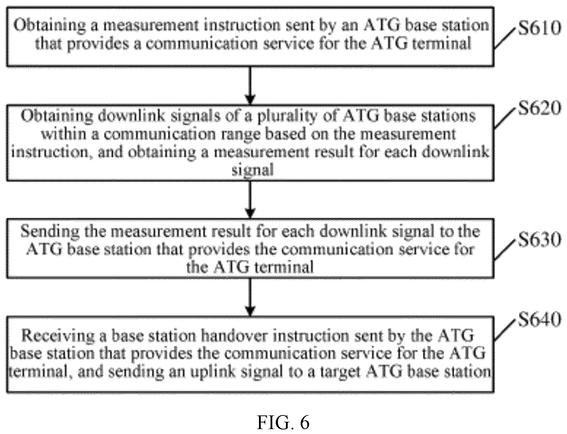

As shown in FIG. 6, FIG. 6 is a schematic flowchart of an aviation mobile communication method applied to an ATG terminal in an aviation mobile communication system provided according to embodiments of the present disclosure. The system may include a plurality of ATG base stations, and a signal frequency of the ATG terminal is at least partially the same as a signal frequency of an IMT base station.

In S610, a measurement instruction, sent by an ATG base station that provides a communication service for the ATG terminal, is obtained. The measurement instruction is generated by the ATG base station that provides the communication service for the ATG terminal when the ATG terminal needs handover of the ATG base station.

In S620, downlink signals of a plurality of ATG base stations within a communication range are obtained based on the measurement instruction, and a measurement result for each downlink signal is obtained.

In S630, the measurement result for each downlink signal is sent to the ATG base station that provides the communication service for the ATG terminal.

In S640, a base station handover instruction, sent by the ATG base station that provides the communication service for the ATG terminal, is received; and an uplink signal is sent to a target ATG base station. The manner for determining the target ATG base station is: receiving, by the ATG base station that provides the communication service for the ATG terminal, the measurement result for each downlink signal; obtaining a quantity of IMT base stations in a coverage area of an uplink signal from the target ATG terminal to each ATG base station; and, determining the target ATG base station based on the measurement result for each downlink signal and the quantity of the IMT base stations.

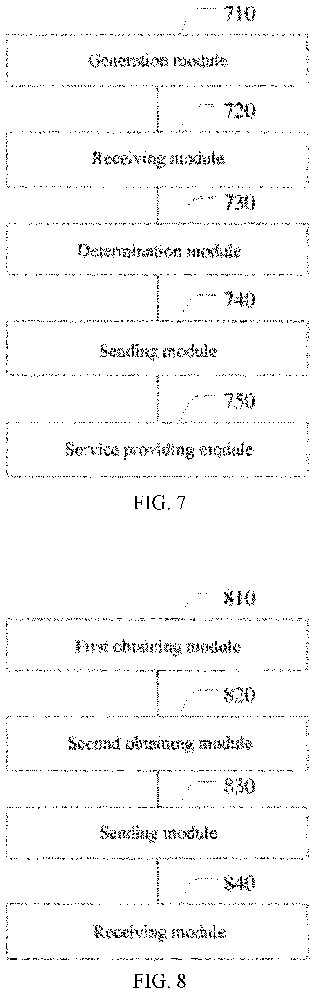

Based on the foregoing method embodiments, according to embodiments of the present disclosure, there is provided an aviation mobile communication apparatus, applied to an ATG base station in an aviation mobile communication system, where the system may include an ATG terminal and a plurality of ATG base stations, and a signal frequency of the ATG terminal is at least partially the same as a signal frequency of an IMT base station. As shown in FIG. 7, FIG. 7 is a schematic structural diagram of an aviation mobile communication apparatus according to embodiments of the present disclosure. The apparatus may include a generation module 710, a receiving module 720, a determination module 730, a sending module740, and a service providing module 750.

The generation module 710 may be configured to, when a target ATG terminal for which the ATG base station provides a communication service needs handover of the ATG base station, generate a measurement instruction for the target ATG terminal and send the measurement instruction to the target ATG terminal, so that the target ATG terminal obtains downlink signals of a plurality of ATG base stations in a communication range based on the measurement instruction, obtains a measurement result for each downlink signal, and sends the measurement result for each downlink signal to the ATG base station that provides the communication service for the ATG terminal.

The receiving module 720 may be configured to receive the measurement result for each downlink signal sent by the target ATG terminal for which the ATG base station provides the communication service, and obtain a quantity of IMT base stations in a coverage area of an uplink signal from the target ATG terminal to each ATG base station.

The determination module 730 may be configured to determine a target ATG base station based on the measurement result for each downlink signal and the quantity of IMT base stations.

The sending module 740 may be configured to send a base station handover instruction to the target ATG terminal, and send an instruction for providing a service for the target ATG terminal to the target ATG base station, so that the target ATG terminal sends an uplink signal to the target ATG base station after receiving the base station handover instruction, and the target ATG base station provides a communication service for the target ATG terminal after receiving the instruction for providing the service for the target ATG terminal.

The service providing module 750 may be configured to provide the communication service for the target ATG terminal when receiving the instruction for providing the service for the target ATG terminal sent by another ATG base station.

In a possible embodiment, the apparatus may further include:
a signal quality determination module (not shown in the figure), which may be configured to determine a signal quality of each downlink signal after receiving the measurement result for each downlink signal sent by the target ATG terminal for which the ATG base station provides the communication service.

The determination module 730 may be further configured to:
when it is absent that signal qualities of downlink signals of a preset quantity of ATG base stations reach a preset signal quality threshold, take an ATG base station corresponding to a downlink signal with a best signal quality as the target ATG base station; or
when it is present that signal qualities of downlink signals of a preset quantity of ATG base stations reach the preset signal quality threshold, for each ATG base station within the communication range, obtain a quantity of IMT base stations in a coverage area of an uplink signal from the target ATG terminal to the ATG base station, and take an ATG base station with a minimum quantity as the target ATG base station.

In a possible embodiment, the apparatus may further include:
a processing module (not shown), which may be configured to, providing the communication service for the target ATG terminal, if a preset signal sent by a specified IMT base station is received, generate a measurement instruction, where the specified IMT base station is an IMT base station in the coverage area of the uplink signal from the target ATG terminal to the ATG base station, the preset signal represents that the uplink signal from the target ATG terminal to the ATG base station has uplink interference to the specified IMT base station, and the interference exceeds a preset interference threshold.

In a possible embodiment, the determination module 730 may be further configured to:
when providing the communication service for the target ATG terminal, for each ATG base station within the communication range, obtain a width of a transmit beam of an ATG terminal antenna corresponding to the ATG base station;
calculate the coverage area of the uplink signal from the target ATG terminal to the ATG base station according to the width of the transmit beam of the ATG terminal antenna; and
calculate the quantity of IMT base stations in the coverage area.

Based on the method embodiments, according to embodiments of the present disclosure, there is provided another aviation mobile communication apparatus, applied to an ATG terminal in an aviation mobile communication system. The system may include a plurality of ATG base stations, and a signal frequency of the ATG terminal is at least partially the same as a signal frequency of an IMT base station. As shown in FIG. 8, FIG. 8 is a schematic structural diagram of an aviation mobile communication apparatus provided according to embodiments of the present disclosure. The apparatus may include a first obtaining module 810, a second obtaining module 820, a sending module 830, and a receiving module 840.

The first obtaining module 810 may be configured to obtain a measurement instruction sent by an ATG base station that provides a communication service for the ATG terminal, where the measurement instruction is generated by the ATG base station that provides the communication service for the ATG terminal when the ATG terminal needs to handover of the ATG base station.

The second obtaining module 820 may be configured to obtain downlink signals of a plurality of ATG base stations within a communication range based on the measurement instruction, and obtain a measurement result for each downlink signal.

The sending module 830 may be configured to send the measurement result for each downlink signal to the ATG base station that provides the communication service for the ATG base station.

The receiving module 840 may be configured to receive a base station handover instruction sent by the ATG base station that provides the communication service for the ATG terminal, and send an uplink signal to a target ATG base station, where a manner for determining the target ATG base station is: receiving, by the ATG base station that provides the communication service for the ATG terminal, the measurement result for each downlink signal, obtaining a quantity of IMT base stations in a coverage area of an uplink signal from the target ATG terminal to each ATG base station, and determining the target ATG base station based on the measurement result for each downlink signal and the quantity of the IMT base stations.

With regard to the apparatus in the embodiments, the specific manner for the various modules to perform operations has been described in detail in the embodiments related to the method, which will not be described in detail here.

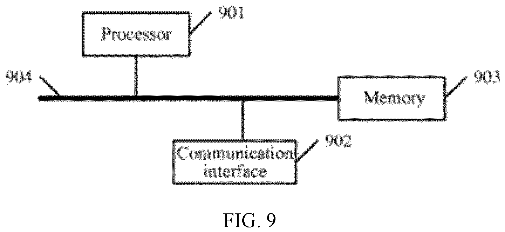

According to embodiments of the present disclosure, there is further provided an electronic device, as shown in FIG. 9, including a processor 901, a communication interface 902, a memory 903, and a communication bus 904, where the processor 901, the communication interface 902, and the memory 903 communicate with each other through the communication bus 904.

The memory 903 is configured to store a computer program.

The processor 901 is configured to, when executing the program stored in the memory 903, implement the following steps:
when a target ATG terminal for which an ATG base station provides a communication service needs handover of the ATG base station, generating a measurement instruction for the target ATG terminal, and sending the measurement instruction to the target ATG terminal, so that the target ATG terminal obtains downlink signals of a plurality of ATG base stations within a communication range based on the measurement instruction, obtains a measurement result for each downlink signal, and sends the measurement result for each downlink signal to the ATG base station that provides the communication service for the target ATG terminal;
receiving the measurement result for each downlink signal sent by the target ATG terminal for which the ATG base station provides the communication service, and obtaining a quantity of IMT base stations in a coverage area of an uplink signal from the target ATG terminal to each ATG base station;
determining a target ATG base station based on the measurement result for each downlink signal and the quantity of the IMT base stations;
sending a base station handover instruction to the target ATG terminal, and sending an instruction for providing a service for the target ATG terminal to the target ATG base station, so that the target ATG terminal sends an uplink signal to the target ATG base station after receiving the base station handover instruction, and the target ATG base station provides a communication service for the target ATG terminal after receiving the instruction for providing the service for the target ATG terminal; and
when receiving an instruction for providing a service for the target ATG terminal sent by another ATG base station, providing the communication service for the target ATG terminal.

Optionally, the processor 901 is configured to, when executing the program stored in the memory 903, further implement any of the above-mentioned aviation mobile communication methods.

According to embodiments of the present disclosure, there is further provided an electronic device, including a processor, a communication interface, a memory, and a communication bus, where the processor, the communication interface, and the memory communicate with each other through the communication bus.

The memory is configured to store a computer program.

The processor is configured to, when executing the program stored in the memory, implement the following steps:
obtaining a measurement instruction sent by an ATG base station that provides a communication service for an ATG terminal, where the measurement instruction is generated by the ATG base station that provides the communication service for the ATG terminal when the ATG terminal needs handover of the ATG base station;
obtaining downlink signals of a plurality of ATG base stations within a communication range based on the measurement instruction, and obtaining a measurement result for each downlink signal;
sending the measurement result for each downlink signal to the ATG base station that provides the communication service for the ATG terminal; and
receiving a base station handover instruction sent by the ATG base station that provides the communication service for the ATG terminal, and sending an uplink signal to a target ATG base station, where a manner for determining the target ATG base station is: receiving, by the ATG base station that provides the communication service for the ATG terminal, the measurement result for each downlink signal, obtaining a quantity of IMT base stations in a coverage area of an uplink signal from the target ATG terminal to each ATG base station, and determining the target ATG base station based on the measurement result for each downlink signal and the quantity of the IMT base stations.

Optionally, the processor is configured to, when executing the program stored in the memory, further implement the any of the above-mentioned aviation mobile communication methods.

The communication bus mentioned in the above electronic device may be a peripheral component interconnect (PCI) bus or an extended industry standard architecture (EISA) bus, or the like. The communication bus may be classified into an address bus, a data bus, a control bus, or the like. For ease of representation, only one thick line is used for representation in the figure, but it does not mean that there is only one bus or one type of bus.

The communication interface is configured for communication between the electronic device and another device.

The memory may include a random access memory (RAM), or may include a non-volatile memory (NVM), such as, at least one magnetic disk memory. Optionally, the memory may alternatively be at least one storage apparatus located away from the foregoing processor.

The processor may be a general-purpose processor, including a central processing unit (CPU), a network processor (NP), or the like, or may be a digital signal processor (DSP), an application specific integrated circuit (ASIC), a field-programmable gate array (FPGA), or another programmable logic device, a discrete gate or a transistor logic device, a discrete hardware component.

In yet another embodiment provided by the present disclosure, there is further provided a computer-readable storage medium, where a computer program is stored in the computer-readable storage medium. When the computer program is executed by a processor, the steps of any one of the above-mentioned aviation mobile communication methods are implemented.

In another embodiment provided by the present disclosure, there is further provided a computer program product including an instruction. When the computer program product runs on a computer, the computer is enabled to perform any aviation mobile communication method in the foregoing embodiments.

All or some of the foregoing embodiments may be implemented by using software, hardware, firmware, or any combination of them. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, a computer, a server, or a data center to another website, computer, server, or data center in a wired (e.g., a coaxial cable, an optical fiber, a digital subscriber line (DSL)), or a wireless (e.g., infrared, wireless, microwave, etc.) manner. The computer-readable storage medium may be any usable medium accessible by a computer, or a data storage device, such as a server, a data center, etc., that includes one or more usable medium integrations. The usable medium may be a magnetic medium (for example, a floppy disk, a hard disk, or a magnetic tape), an optical medium (for example, a DVD), a semiconductor medium (for example, a solid state disk (SSD)), or the like.

It should be noted that, in the context, relational terms such as first and second are only used to distinguish one entity or operation from another entity or operation, and do not necessarily require or imply that any such actual relationship or sequence exists between these entities or operations. Moreover, the terms "comprising", " including" or any other variation of them are intended to cover a non-exclusive inclusion, so that a process, method, article, or device that includes a series of elements not only includes those elements, but also includes other elements that are not explicitly listed, or includes elements inherent to such a process, method, article, or device. In the absence of more restrictions, for the element defined by the statement of "including a...", it is not excluded that there are additional identical elements in the process, method, article, or device that includes the element.

The various embodiments in the specification are described in a related manner, and the same or similar parts between the embodiments may refer to each other, and each embodiment focuses on a difference from other embodiments. In particular, for the embodiments of the method, the apparatus, the electronic device, the computer-readable storage medium, and the computer program product including an instruction, since they are substantially similar to the system embodiments, the description is relatively simple, and for the related parts, reference may be made to the description of the system embodiments.

The above are only preferred embodiments of the present disclosure and are not intended to limit the scope of protection of the present disclosure. Any modifications, equivalent replacements, improvements or the like made within the spirit and principle of the present disclosure are all included in the protection scope of the present disclosure.

## Claims

1. An aviation mobile communication system, wherein the system comprises:
an ATG terminal and a plurality of ATG base stations, wherein a signal frequency of the ATG terminal is at least partially the same as a signal frequency of an IMT base station;
the ATG base station is configured to, when a target ATG terminal for which the ATG base station provides a communication service needs handover of the ATG base station, generate a measurement instruction for the target ATG terminal, and send the measurement instruction to the target ATG terminal; wherein the ATG terminal comprises the target ATG terminal;
the target ATG terminal is configured to, after receiving the measurement instruction, obtain downlink signals of the plurality of ATG base stations within a communication range based on the measurement instruction, obtain a measurement result for each downlink signal, and send the measurement result for each downlink signal to the ATG base station that provides the communication service for the target ATG terminal;
the ATG base station is further configured to receive the measurement result for each downlink signal, obtain a quantity of IMT base stations in a coverage area of an uplink signal from the target ATG terminal to each ATG base station, determine a target ATG base station based on the measurement result for each downlink signal and the quantity of the IMT base stations, send a base station handover instruction to the target ATG terminal, and send an instruction for providing a service for the target ATG terminal to the target ATG base station;
the target ATG terminal is configured to send an uplink signal to the target ATG base station after receiving the base station handover instruction; and
the target ATG base station is configured to provide a communication service for the target ATG terminal after receiving the instruction for providing the service for the target ATG terminal.

2. The system according to claim 1, wherein the ATG base station is further configured to:
determine a signal quality of each downlink signal after receiving the measurement result for each downlink signal;
when it is absent that signal qualities of downlink signals of a preset quantity of ATG base stations reach a preset signal quality threshold, take an ATG base station corresponding to a downlink signal with a best signal quality as the target ATG base station; or
when it is present that signal qualities of downlink signals of a preset quantity of ATG base stations reach the preset signal quality threshold, for each ATG base station in the communication range, obtain a quantity of IMT base stations in the coverage area of the uplink signal from the target ATG terminal to the ATG base station, and take an ATG base station with a minimum quantity as the target ATG base station.

3. The system according to claim 1 or 2, wherein the ATG base station is further configured to:
when providing the communication service for the target ATG terminal, if a preset signal sent by a specified IMT base station is received, generate a measurement instruction, wherein the specified IMT base station is an IMT base station in the coverage area of the uplink signal from the target ATG terminal to the ATG base station, and the preset signal represents that the uplink signal from the target ATG terminal to the ATG base station has uplink interference to the specified IMT base station, and the interference exceeds a preset interference threshold.

4. The system according to claim 2, wherein the ATG terminal comprises a plurality of ATG terminal antennas; and
the ATG base station is further configured to:
when providing the communication service for the target ATG terminal, for each ATG base station within the communication range, obtain a width of a transmit beam of an ATG terminal antenna corresponding to the ATG base station;
calculate the coverage area of the uplink signal from the target ATG terminal to the ATG base station according to the width of the transmit beam of the ATG terminal antenna; and
calculate the quantity of IMT base stations in the coverage area.

5. An aviation mobile communication method, applied to an ATG base station in an aviation mobile communication system, wherein the system further comprises an ATG terminal and another plurality of ATG base stations, a signal frequency of the ATG terminal is at least partially the same as a signal frequency of an IMT base station, and the method comprises:
when a target ATG terminal for which the ATG base station provides a communication service needs handover of the ATG base station, generating a measurement instruction for the target ATG terminal, and sending the measurement instruction to the target ATG terminal, to enable the target ATG terminal to obtain downlink signals of a plurality of ATG base stations within a communication range based on the measurement instruction, obtain a measurement result for each downlink signal, and send the measurement result for each downlink signal to the ATG base station that provides the communication service for the target ATG terminal; wherein the ATG terminal comprises the target ATG terminal;
receiving the measurement result for each downlink signal sent by the target ATG terminal, and obtaining a quantity of IMT base stations in a coverage area of an uplink signal from the target ATG terminal to each ATG base station;
determining a target ATG base station based on the measurement result for each downlink signal and the quantity of the IMT base stations;
sending a base station handover instruction to the target ATG terminal, and sending an instruction for providing a service for the target ATG terminal to the target ATG base station, to enable the target ATG terminal to send an uplink signal to the target ATG base station after receiving the base station handover instruction, and enable the target ATG base station to provide a communication service for the target ATG terminal after receiving the instruction for providing the service for the target ATG terminal; and
when receiving an instruction for providing a service for the target ATG terminal sent by another ATG base station, providing the communication service for the target ATG terminal.

6. The method according to claim 5, wherein after the receiving the measurement result for each downlink signal sent by the target ATG terminal for which the ATG base station provides the communication service, the method comprises:
determining a signal quality of each downlink signal;
wherein determining the target ATG base station based on the measurement result for each downlink signal and the quantity of the IMT base stations comprises:
when it is absent that signal qualities of downlink signals of a preset quantity of ATG base stations reach a preset signal quality threshold, taking an ATG base station corresponding to a downlink signal with a best signal quality as the target ATG base station; or
when it is present that signal qualities of downlink signals of a preset quantity of ATG base stations reach the preset signal quality threshold, for each ATG base station within the communication range, obtaining a quantity of IMT base stations in the coverage area of the uplink signal from the target ATG terminal to the ATG base station, and taking an ATG base station with a minimum quantity as the target ATG base station.

7. The method according to claim 5 or 6, wherein the method further comprises:
when providing the communication service for the target ATG terminal, if a preset signal sent by a specified IMT base station is received, generating a measurement instruction, wherein the specified IMT base station is an IMT base station in the coverage area of the uplink signal from the target ATG terminal to the ATG base station, the preset signal represents that the uplink signal from the target ATG terminal to the ATG base station has uplink interference to the specified IMT base station, and the interference exceeds a preset interference threshold.

8. The method according to claim 6, wherein obtaining the quantity of IMT base stations in the coverage area of the uplink signal from the target ATG terminal to the ATG base station comprises:
when providing the communication service for the target ATG terminal, for each ATG base station within the communication range, obtaining a width of a transmit beam of an ATG terminal antenna corresponding to the ATG base station;
calculating the coverage area of the uplink signal from the target ATG terminal to the ATG base station according to the width of the transmit beam of the ATG terminal antenna; and
calculating the quantity of IMT base stations in the coverage area.

9. An aviation mobile communication method, applied to an ATG terminal in an aviation mobile communication system, wherein the system further comprises a plurality of ATG base stations, a signal frequency of the ATG terminal is at least partially the same as a signal frequency of an IMT base station, and the method comprises:
obtaining a measurement instruction sent by an ATG base station that provides a communication service for the ATG terminal, wherein the measurement instruction is generated by the ATG base station that provides the communication service for the ATG terminal when the ATG terminal needs handover of the ATG base station;
obtaining downlink signals of a plurality of ATG base stations within a communication range based on the measurement instruction, and obtaining a measurement result for each downlink signal;
sending the measurement result for each downlink signal to the ATG base station that provides the communication service for the ATG terminal; and
receiving a base station handover instruction sent by the ATG base station that provides the communication service for the ATG terminal, and sending an uplink signal to a target ATG base station, wherein a manner for determining the target ATG base station is: receiving, by the ATG base station that provides the communication service for the ATG terminal, the measurement result for each downlink signal, obtaining a quantity of IMT base stations in a coverage area of an uplink signal from the target ATG terminal to each ATG base station, and determining the target ATG base station based on the measurement result for each downlink signal and the quantity of the IMT base stations.

10. An aviation mobile communication apparatus, applied to an ATG base station in an aviation mobile communication system, wherein the system further comprises an ATG terminal and another plurality of ATG base stations, a signal frequency of the ATG terminal is at least partially the same as a signal frequency of an IMT base station, and the apparatus comprises:
a generation module, configured to, when a target ATG terminal for which the ATG base station provides a communication service needs handover of the ATG base station, generate a measurement instruction for the target ATG terminal, and send the measurement instruction to the target ATG terminal, to enable the target ATG terminal to obtain downlink signals of a plurality of ATG base stations in a communication range based on the measurement instruction, obtain a measurement result for each downlink signal, and send the measurement result for each downlink signal to the ATG base station that provides the communication service for the target ATG terminal; wherein the ATG terminal comprises the target ATG terminal;
a receiving module, configured to receive the measurement result for each downlink signal sent by the target ATG terminal, and obtain a quantity of IMT base stations in a coverage area of an uplink signal from the target ATG terminal to each ATG base station;
a determination module, configured to determine a target ATG base station based on the measurement result for each downlink signal and the quantity of the IMT base stations;
a sending module, configured to send a base station handover instruction to the target ATG terminal, and send an instruction for providing a service for the target ATG terminal to the target ATG base station, to enable the target ATG terminal to send an uplink signal to the target ATG base station after receiving the base station handover instruction, and enable the target ATG base station to provide a communication service for the target ATG terminal after receiving the instruction for providing the service for the target ATG terminal;
a service providing module, configured to provide the communication service for the target ATG terminal when receiving an instruction sent by another ATG base station for providing a service for the target ATG terminal.

11. The apparatus according to claim 10, wherein after receiving the measurement result for each downlink signal sent by the target ATG terminal for which the ATG base station provides the communication service, the apparatus comprises:
a signal instruction determination module, configured to determine a signal quality of each downlink signal;
wherein the determination module is further configured to:
when it is absent that signal qualities of downlink signals of a preset quantity of ATG base stations reach a preset signal quality threshold, take an ATG base station corresponding to a downlink signal with a best signal quality as the target ATG base station; or
when it is present that signal qualities of downlink signals of a preset quantity of ATG base stations reach the preset signal quality threshold, for each ATG base station within the communication range, obtain a quantity of IMT base stations in the coverage area of the uplink signal from the target ATG terminal to the ATG base station, and take an ATG base station with a minimum quantity as the target ATG base station.

12. The apparatus according to claim 10 or 11, wherein the apparatus further comprises:
a processing module, configured to, when providing the communication service for the target ATG terminal, if a preset signal sent by a specified IMT base station is received, generate a measurement instruction, wherein the specified IMT base station is an IMT base station in the coverage area of the uplink signal from the target ATG terminal to the ATG base station, the preset signal represents that the uplink signal from the target ATG terminal to the ATG base station has uplink interference to the specified IMT base station, and the interference exceeds a preset interference threshold.

13. The apparatus according to claim 11, wherein the determination module is further configured to:
when providing the communication service for the target ATG terminal, for each ATG base station within the communication range, obtain a width of a transmit beam of an ATG terminal antenna corresponding to the ATG base station;
calculate the coverage area of the uplink signal from the target ATG terminal to the ATG base station according to the width of the transmit beam of the ATG terminal antenna; and
calculate the quantity of IMT base stations in the coverage area.

14. An aviation mobile communication apparatus, applied to an ATG terminal in an aviation mobile communication system, wherein the system further comprises a plurality of ATG base stations, a signal frequency of the ATG terminal is at least partially the same as a signal frequency of an IMT base station, and the apparatus comprises:
a first obtaining module, configured to obtain a measurement instruction sent by an ATG base station that provides a communication service for the ATG terminal, wherein the measurement instruction is generated by the ATG base station that provides the communication service for the ATG terminal when the ATG terminal needs to handover of the ATG base station;
a second obtaining module, configured to obtain downlink signals of a plurality of ATG base stations within a communication range based on the measurement instruction, and obtain a measurement result for each downlink signal;
a sending module, configured to send the measurement result for each downlink signal to the ATG base station that provides the communication service for the ATG terminal; and
a receiving module, configured to receive a base station handover instruction sent by the ATG base station that provides the communication service for the ATG terminal, and send an uplink signal to a target ATG base station, wherein a manner for determining the target ATG base station is: receiving, by the ATG base station that provides the communication service for the ATG terminal, the measurement result for each downlink signal, obtaining a quantity of IMT base stations in the coverage area of the uplink signal from the target ATG terminal to each ATG base station, and determining the target ATG base station based on the measurement result for each downlink signal and the quantity of the IMT base stations.

15. An electronic device, comprising a processor, a communication interface, a memory, and a communication bus; wherein the processor, the communication interface, and the memory communicate with each other through the communication bus;
the memory is configured to store a computer program; and
the processor is configured to, when executing the program stored in the memory, implement steps of the method according to claims 5 to 9.

16. A storage medium, wherein a computer program is stored in the storage medium, and when the computer program is executed by a processor, steps of the method according to any one of claims 5 to 9 are implemented.
